# EUROPÄISCHE PATENTSCHRIFT

(11) **EP 1 798 108 B1**
(45) Veröffentlichungstag und Bekanntmachung des Hinweises auf die Patenterteilung: **18.03.2009**
(21) Anmeldenummer: 06025279.8
(22) Anmeldetag: 07.12.2006
(51) Int. Cl.: B60R 5/04

(54) **Verriegelbare Auszugsschiebeführung**
Lockable rollerguide
Guidage de coulissement d'arrêt

(30) Priorität: 15.12.2005 DE 102005060409
(43) Veröffentlichungstag der Anmeldung: 20.06.2007
(73) Patentinhaber: Magna Car Top Systems GmbH, 74321 Bietigheim-Bissingen (DE)
(72) Erfinder: Neubronner, Ronald, 71254 Ditzingen (DE)

(56) Entgegenhaltungen:
- WO-A-01/53131
- DE-A1- 10 231 963
- DE-A1- 10 333 354
- DE-U1- 29 615 884
- US-A- 4 824 158
- US-A1- 2005 212 317

## Beschreibung

Die Erfindung betrifft eine verriegelbare Auszugschiebeführung, insbesondere für ausziehbare Lastenträger von Fahrzeugen, gemäß dem Oberbegriff des Anspruches 1.

Auszugschiebeführungen der vorgenannten Art sind aus der DE 296 15 884 U1 für heckseitig ausziehbare Lastenträger von Fahrzeugen bekannt und weisen fahrzeugfeste, längsseitlich liegende, mit der offenen Seite ihres U-förmigen Profiles gegeneinander gerichtete Führungsschienen auf. In diesen Führungsschienen sind zum Fahrzeug nach hinten ausziehbare, Rechteckquerschnitt aufweisende Tragschienen durch Abstimmen der Querschnitte unmittelbar geführt. In Querrichtung sind die Tragschienen miteinander verbunden, so dass ein Tragrahmen entsteht, der nach hinten über das Fahrzeug ausgezogen als Lastaufnahme dient und der über die Führungsschienen und die Tragschienen gegeneinander verriegelnde Sicherungsstifte in seiner ausgezogenen oder eingeschobenen Lage zu fixieren ist. Die unmittelbare Führung der Tragschienen in den Führungsschienen führt zwar zu einer besonders stabilen Konstruktion, macht eine solche Konstruktion aber korrosions- und verschmutzungsanfällig. Dadurch ist ein hoher Wartungsbedarf gegeben, wenn eine solche Auszugschiebeführung auch nach längerer Zeit, in der sie nicht genutzt wurde, in gewünschter Weise.bedienfreundlich zu handhaben sein soll.

Der Erfindung liegt die Aufgabe zugrunde, eine Auszugschiebeführung der eingangs genannten Art so auszubilden, dass ihre Nutzung bei guter Bedienbarkeit auch unter ungünstigen Einsatzbedingungen, wie sie beispielsweise im rauen Kraftfahrzeugbetrieb gegeben sind, noch gewährleistet ist.

Gemäß der Erfindung wird dies mit den Merkmalen des Anspruches 1 erreicht, demzufolge die Tragschienen U-förmigen Querschnitt aufweisen und somit als offenes Profil übergreifend zur jeweiligen Führungsschiene angeordnet sind. In Verbindung mit einer derartigen Anordnung ist die Tragschiene gegen die Führungsschiene jeweils über eine Tragvorrichtung abgestützt, die von der Seite zwischen die Schenkel der Führungsschiene eingreift und die von einem Schenkel der Tragschiene getragen und auskragend zu diesem angeordnet ist. Dadurch ist ein Grundaufbau geschaffen, der eine bezogen auf die einander zugewandten Flächen von Tragschiene und Führungsschiene berührungsfreie Abstützung der Tragschiene gegen die Führungsschiene ermöglicht und bei dem die Tragvorrichtung zudem in einem über Tragschiene und Führungsschiene geschützten, aber gegen die Umgebung offenen Bereich angeordnet ist, so dass einerseits ohne Zusatzaufwand ein verhältnismäßig guter Schutz gegen Verschmutzungen zu erreichen ist, Schmutzpartikel aufgrund der gegen die Umgebung offenen Bauweise aber herausfallen und/oder herausgespült oder herausgedrückt werden und bei der ferner aufgrund der offenen Bauweise und der damit verbundenen Belüftung auch die Korrosionsgefahr reduziert ist.

Insbesondere gilt dies, wenn die Tragschiene von oben übergreifend zur Führungsschiene angeordnet ist und somit quasi eine dachförmige Überdeckung bildet. In Verbindung mit einer derartigen Ausgestaltung erweist sich eine Ausbildung der Tragvorrichtung als besonders zweckmäßig, bei der die Abstützung gegen die einander gegenüberliegenden Schenkel der Führungsschiene über Rollen erfolgt, und zwar über jeweils zumindest eine Rolle gegen jeweils einen der Schenkel der Führungsschiene. So kann die Tragvorrichtung, beispielsweise ähnlich Inlineskatern, einen gegen den einen Schenkel der Führungsschiene und einen gegen den anderen Schenkel der Führungsschiene abstützenden Rollensatz aufweisen.

Eine besonders einfache Form der Abstützung besteht darin, die sich in Ausziehrichtung erstreckende Tragvorrichtung an ihren zueinander beabstandeten, gegenüberliegenden Enden mit zumindest jeweils einer Tragrolle zu versehen und über jeweils eine dieser Tragrollen die Tragvorrichtung gegen jeweils einen anderen der einander gegenüberliegenden Schenkel der Führungsschiene abzustützen.

Im Hinblick auf die Ausziehbarkeit der Tragschiene gegenüber der Führungsschiene erweist es sich als zweckmäßig, die Tragvorrichtung dem bei ausgezogener Tragschiene in Überdeckung zur Führungsschiene verbleibenden Endbereich der Tragschiene zuzuordnen, und zwar bezogen auf die Tragschiene höhenversetzt zueinander, wobei die bezogen auf die Auszugsrichtung vordere Rolle tiefer als die hintere Rolle liegt.

Über die Tragvorrichtung erfolgt zweckmäßigerweise auch eine Querabstützung der Tragschiene zur Führungsschiene in zumindest einer Richtung, und zwar insbesondere in Richtung auf den Steg der Führungsschiene, was sich in einfacher Weise dadurch erreichen lässt, dass den Schenkeln der Führungsschiene oder zumindest einem der Schenkel der Führungsschiene eine Anlaufschulter zugeordnet wird, und zwar zweckmäßigerweise beabstandet zum Steg der Führungsschiene.

Als Verriegelungsvorrichtung wird zweckmäßigerweise eine Anordnung vorgesehen, über die die Tragschiene zur Führungsschiene im Bereich eines Schenkels der Tragschiene formschlüssig gegen den Steg der Führungsschiene festgelegt wird, wobei über die Verriegelungsvorrichtung bevorzugt auch eine Verspannung quer zur Auszugsrichtung erfolgt, und zwar im Sinne eines Anlegens der Tragrollen, insbesondere gegen eine jeweilige Anlaufschulter.

Die Verriegelungsvorrichtung arbeitet zweckmäßigerweise mit Riegelkörpern, die in Eingriffsrichtung auf die Tragschiene sich verjüngend ausgebildet sind, sei es als Riegelbolzen oder Riegelkeil, wobei sich eine Verspannung auf die Verriegelungslage mit federnden Mitteln als zweckmäßig erweist.

Besonders vorteilhaft ist es, analog zur Tragvorrichtung mit zwei endseitigen Tragrollen eine Verriegelungsvorrichtung als Riegelbrücke mit endseitigen Riegelkörpern auszubilden, wobei die Riegelkörper in Verriegelungslage bevorzugt im Bereich der Tragrollen liegen und wobei es sich als zweckmäßig erweist, auch die Riegelkörper höhenversetzt zueinander an der Tragschiene geführt abzustützen, wobei der Höhenversatz der Riegelkörper bevorzugt derart ist, dass diese beim Verschieben der Tragschiene gegenüber der Führungsschiene jeweils, trotz der vorgegebenen Federbelastung, nur in die für sie seitens der Führungsschiene vorgesehenen Aufnahmen einfallen können, da im Zwischenbereich, bei Anlage der Riegelkörper, der Steg der Führungsschiene eine geschlossene Gleitbahn bildet. Dadurch ist es ohne Mehraufwand möglich, die Tragschiene gegenüber der Führungsschiene in beiden Endlagen zu verriegeln, da die Tragvorrichtung mit der Tragschiene mitläuft. Bevorzugt ist der Höhenversatz der Riegelkörper entgegengesetzt zum Höhenversatz der jeweils benachbarten Tragrollen, so dass die Abstützung über die Riegelkörper im Bereich der Tragrollen erfolgt, wobei die Riegelkörper, entsprechend ihrer keilförmigen oder konischen Ausbildung bei entsprechender Ausgestaltung der seitens des Steges der Führungsschiene vorgesehenen Aufnahmen in der Verriegelungslage die Tragschiene zur Führungsschiene nicht nur in Auszugsrichtung, sondern auch quer hierzu, in Hochrichtung, festlegen und wobei diese Festlegung erfindungsgemäß bevorzugt derart erfolgt, dass über die Riegelkörper die Tragschiene aus ihrer Abstützlage zur Führungsschiene über die jeweilige Tragrolle etwas versetzt wird, so dass die Tragrolle entlastet und insbesondere auch Korrosionsansätze im Bereich der Anlage zwischen Tragrolle und Führungsschiene vermieden werden. Eine solche Entlastung erweist sich insbesondere für Tragrollen als zweckmäßig, die durch Kugellager gebildet sind, wobei die Kugellager umfangsseitig mit Vorteil beschichtet sind.

Eine derartige Auszugschiebeführung ist insbesondere bei ihrer zur Längserstreckung symmetrischen Gestaltung als ausziehbarer Lastenträger für Fahrzeuge zweckmäßig, wobei die bei dieser Gestaltung parallel liegende Anordnung von Auszugschiebeführungen auch eine gemeinsame Betätigung der Verriegelungsvorrichtungen ermöglicht, weswegen die Verriegelungsvorrichtungen bevorzugt den einander zugewandten Schenkeln der Tragschienen zugeordnet sind. Auf diese Weise lassen sich einfache Seilzuganordnungen, Scherengestänge oder dergleichen zur gemeinsamen Betätigung der Verriegelungsvorrichtungen nutzen, wobei die Abstützung solcher Betätigungsvorrichtungen an der als Tragfläche dienenden Überdeckung zu den Führungsschienen erfolgen kann.

Weitere Einzelheiten und Merkmale der Erfindung ergeben sich aus den Ansprüchen. Ferner wird die Erfindung nachstehend anhand eines Ausführungsbeispieles erläutert. Es zeigen:
- Fig. 1: eine auseinander gezogene Schemadarstellung des Grundaufbaus eines ausziehbaren Lastenträgers für Fahrzeuge mit erfindungsgemäß verriegelbaren Auszugschiebeführungen,
- Fig. 2: eine schematisierte Querschnittsdarstellung durch die bezogen auf die Auszugsrichtung in Fig. 1 rechte Auszugschiebeführung, stark vereinfacht, und
- Fig. 3: eine solche Auszugschiebeführung in einem vereinfachten, schematisierten Schnitt gemäß Schnittlinie III-III in Fig. 2.

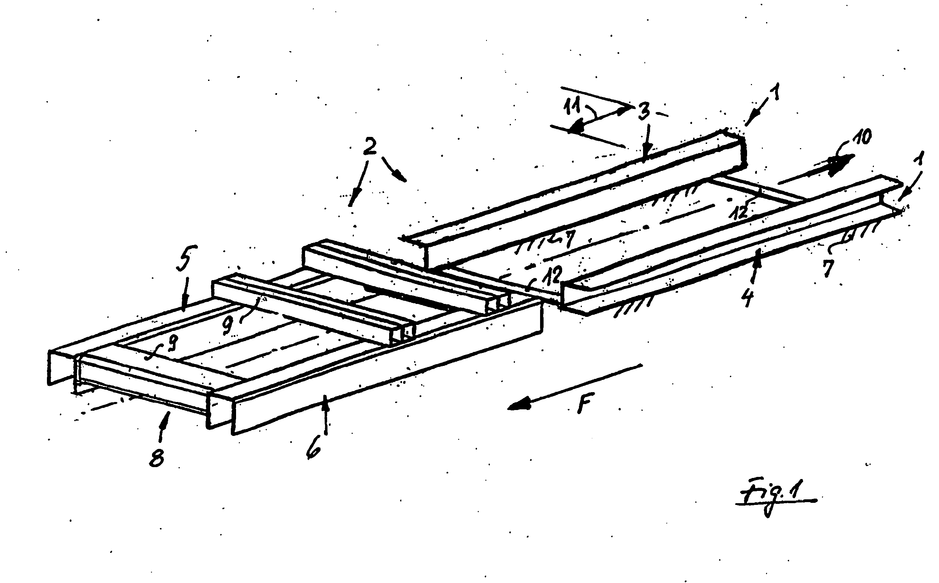

Die erfindungsgemäße, verriegelbare Auszugschiebeführung 1 ist in Fig. 1 im Grundaufbau vereinfacht in der Anwendung auf einen ausziehbaren Lastenträger 2 für Fahrzeuge dargestellt, der sich in Fig. 1 in Fahrtrichtung F des ansonsten nicht dargestellten Fahrzeuges erstreckt und der sich als eine aus zwei längsseitlichen Auszugschiebeführungen 1 aufbauende Einheit darstellt, deren beide Auszugschiebeführungen 1 jeweils eine Führungsschiene 3, 4 und eine Tragschiene 5, 6 umfassen. Für die Führungsschienen 3, 4 als dem fahrzeugseitigen Teil der Auszugschiebeführung 1 zugehörige Elemente ist deren Anbindung zum Fahrzeug symbolisch strichliert bei 7 angedeutet.

Die Tragschienen 5, 6 sind zu einem Tragrahmen 8 verbunden, wobei entsprechende Querverbindungen bei 9 angedeutet sind und wobei diese Querverbindungen 9 teilweise Trageinrichtungen für auf dem Lastenträger 2 zu befestigende Gegenstände bilden. Der Tragrahmen 8 ist entgegen der Fahrtrichtung F, wie über den Pfeil 10 angedeutet, zum Fahrzeug nach hinten ausziehbar, wobei die Tragschienen 5, 6 auf den Führungsschienen 3, 4 geführt und abgestützt sind und wobei im ausgezogenen Zustand, also bei entgegen der Fahrtrichtung F nach hinten über die Führungsschienen 3, 4 überstehenden Tragschienen 5, 6, ein Überlappungsbereich 11 zwischen Führungsschienen 3, 4 und Tragschienen 5, 6 verbleibt.

Die Führungsschienen 3, 4, die in der Darstellung durch Querstreben 12 verbunden und so zu einer Bau- und Montageeinheit zusammengefasst sind, sind als zur Auszugsrichtung gemäß Pfeil 10 parallel verlaufende U-Profile gestaltet, welche im Ausführungsbeispiel nach voneinander abgewandten, also entgegengesetzten Seiten offen sind. Diese Führungsschienen 3, 4 werden von den Tragschienen 5, 6 im montierten Zustand des Lastenträgers 2 übergriffen, wobei die Tragschienen 5, 6, wie die Führungsschienen 3, 4, als U-Profile gestaltet sind, die aber nach unten offen sind, so dass die Stege der Tragschienen 5, 6 parallel zu den Schenkeln der Führungsschienen 3, 4 liegen und die nach unten offenen Spalte abschirmend überdeckt sein können (Dichtstreifen 12).

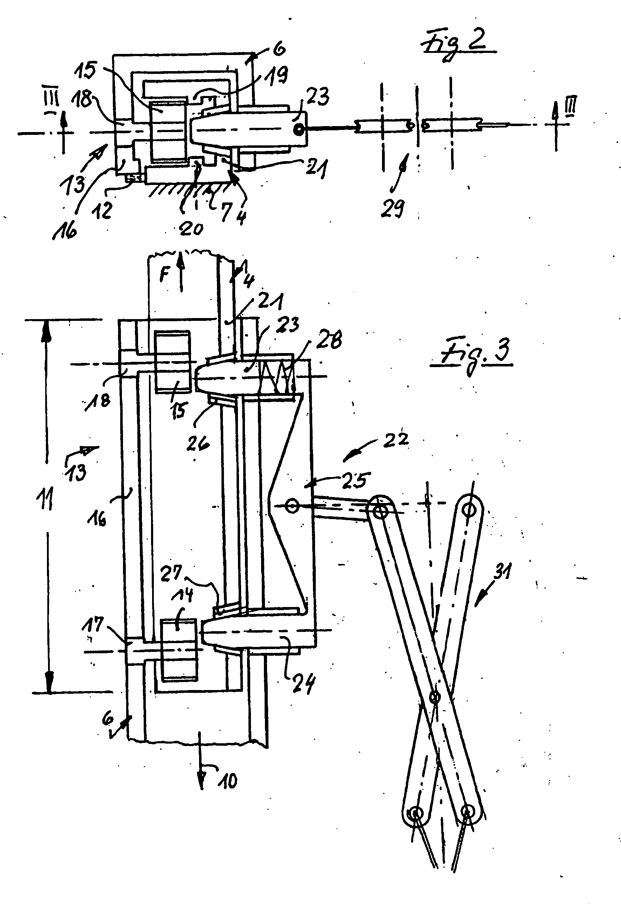

Die abstützende und führende Verbindung zwischen den Führungsschienen 3, 4 und den Tragschienen 5, 6 erfolgt jeweils über eine Tragvorrichtung 13, wie sie anhand der Fig. 2 und 3 näher erläutert wird, wobei die Fig. 2 und 3 sich in der Darstellung im Wesentlichen auf die Führungsschiene 4 und die Tragschiene 6, also die bezogen auf die Auszugsrichtung gemäß Pfeil 10 rechte Seite des Lastenträgers 2 beziehen.

Die Tragvorrichtung 13 umfasst im Ausführungsbeispiel zwei Tragrollen 14, 15, die im bezogen auf die Auszugsrichtung 10 rückwärtigen Endbereich der Tragschiene 6 liegen, der, bezogen auf die ausgezogene Lage des Lastenträgers 2, überlappend zur Führungsschiene 4 liegt, wobei der Überlappungsbereich in Fig. 3 mit 11 bezeichnet ist. Die Tragrollen 14, 15 liegen in Auszugsrichtung zueinander beabstandet und sind in dem Schenkel 16 der Tragschiene 6 abgestützt, der die im Querschnitt offene Seite der Führungsschiene 3 überdeckt, wobei die im Querschnitt offene Seite der Führungsschiene 4 bezogen auf die Anordnung im Lastenträger 2 die äußere Seite der jeweiligen Führungsschiene 3, 4 bildet. Die Tragrollen 14, 15 sind auf Bolzen 17, 18 im Schenkel 16 abgestützt und bevorzugt als Kugellager ausgestaltet, die kunststoffummantelt sind, so dass sich bei geringer Korrosionsanfälligkeit gute Laufeigenschaften ergeben.

Bevorzugt sind, was die Zeichnungen nicht zeigen, die Tragrollen 14, 15 zueinander höhenversetzt angeordnet, und zwar derart, dass die bezogen auf die Auszugsrichtung gemäß Pfeil 10 vordere Tragrolle 14 gegenüber der hinteren Tragrolle 15 nach unten versetzt ist, so dass bei gleich großen Tragrollen 14, 15 ohne Kippbewegung der Tragschienen 5, 6 gegenüber den Führungsschienen 3, 4 ein Ausfahren der Tragschienen 5, 6 gegenüber den Führungsschienen 3, 4 möglich ist, und zwar bei Abstützung der Tragrollen 14, 15 gegen jeweils lediglich einen der Schenkel der Führungsschienen.

Ein gleicher Durchmesser der Tragrollen 14, 15 erweist sich als zweckmäßig, um die Tragrollen 14, 15 gegen beide Schenkel der jeweiligen Führungsschiene 3, 4 über Anlaufschultern 19, 20 in Querrichtung abstützen können, wobei die Anlaufschultern 19, 20 im Ausführungsbeispiel durch vorstehende Rippen gebildet sind, durch die auch ein Querabstand der Tragrollen 15, 16 zum Steg 21 der jeweiligen Führungsschiene 3, 4 festgelegt wird.

Die bezogen auf den Lastenträger 2 einander zugewandt liegenden Stege 21 der Führungsschienen 3, 4 werden zur Verriegelung zwischen Führungsschienen 3, 4 und Tragschienen 5, 6 genutzt, wobei eine entsprechende Verriegelungsvorrichtung bei 22 angedeutet ist und Riegelkörper 23, 24 aufweist, die über eine in Auszugsrichtung verlaufende Verbindungsstrebe zu einer Riegelbrücke 25 zusammengefasst sind, die in konischen Einsteckenden auslaufen und denen seitens des Steges 21 der jeweiligen Führungsschiene 3, 4 konische Aufnahmen 26 bzw. 27 zugeordnet sind. Über die Riegelkörper 23, 24, die als Bolzen oder auch keilförmig ausgebildet sein können, kann in Verbindung mit den konischen Aufnahmen 26, 27 sowohl eine Verriegelung bezogen auf die Auszugsrichtung 10, insbesondere aber auch eine Verriegelung in Hochrichtung bei entsprechender Ausrichtung erreicht werden, wobei die Ausrichtung bezogen auf die Verriegelungslage bevorzugt derartig erfolgt, dass die Tragrollen 14, 15 von Stützkräften in der jeweiligen Verriegelungslage zumindest weitgehend entlastet sind.

Bevorzugt liegen hierzu die Riegelkörper 23, 24 bzw. die diesen seitens der Führungsschienen 3, 4 zugeordneten konischen Aufnahmen 26, 27 in der Verriegelungslage im Bereich der Tragrollen 14, 15, wobei sich sowohl in Auszugsrichtung wie auch quer hierzu in Hochrichtung ein gewisser Versatz als zweckmäßig erweist und der Versatz in Hochrichtung bevorzugt entgegengesetzt zum Versatz der Tragrollen 14, 15 vorgesehen ist.

Die Riegelkörper 23, 24 sind im Rahmen der Erfindung, wie für den Riegelkörper 23 angedeutet, bevorzugt in Richtung auf ihre Verriegelungslage federbelastet - angedeutet durch eine Feder 28 - und es bildet der Steg 21 der Führungsschiene 4 beim Ausziehen oder Einfahren des Lastenträgers 2 für die Riegelkörper 23, 24 bzw. für mindestens einen dieser Riegelkörper 23, 24, die zur Riegelbrücke 25 verbunden sind, eine Führungsbahn, so dass ein Eingriff der Riegelkörper 23, 24 nur in die jeweils zugeordnete konische Aufnahme 26, 27 möglich ist, und dies bei Erreichen der entsprechenden Verriegelungslage.

Da die Verriegelungsvorrichtung mit der jeweiligen Tragschiene 5, 6 mitläuft, ist über die Verriegelungsvorrichtung in gleicher Weise auch eine Verriegelung des Lastenträgers 2 in seiner eingefahrenen Endlage, gegebenenfalls aber auch in Zwischenstellungen möglich.

Aufgrund der im Lastenträger 2 zu dessen in Auszugsrichtung 10 sich erstreckender Längsmittelachse symmetrischen Lage der Auszugschiebeführungen 1 ist eine gemeinsame Betätigung der einander zugewandt angeordneten Verriegelungsvorrichtungen 22 möglich, wobei eine solche Betätigung, wie in Fig. 2 angedeutet, über Seilzuganordnungen 29 oder auch Scherengestänge 31 erfolgen kann, wie sie in Fig. 3 angedeutet sind, wobei Verbindungsteile zwischen den Tragschienen 5, 6 oder auch auf den Tragschienen 5, 6 abgestützte Tragflächen zur lagernden Abstützung der Betätigungseinrichtung genutzt werden können, so beispielsweise zur Abstützung von Seilrollen oder zur Abstützung der Scherenachse des Scherengestänges.

Durch die Erfindung ergibt sich somit basierend auf einfach aufgebauten Auszugschiebeführungen die Möglichkeit, Lastenträger zu gestalten, die trotz ihres einfachen Aufbaus und hoher Stabilität besonders bedienfreundlich sind.

## Patentansprüche

1. Verriegelbare Auszugschiebeführung, insbesondere für ausziehbare Lastenträger von Fahrzeugen, mit einer fahrzeugseitigen, im Querschnitt U-förmigen Führungsschiene sowie mit einer zur Führungsschiene ausziehbaren und zwischen den liegenden Schenkeln der Führungsschiene abgestützten Tragschiene,
**dadurch gekennzeichnet,**
**dass** die Tragschiene (5, 6) U-förmigen Querschnitt aufweist, mit ihren stehenden Schenkeln (16) die Führungsschiene (3, 4) seitlich übergreift und über eine seitlich zwischen die Schenkel der Führungsschiene (3, 4) eingreifende und von einem der Schenkel (16) der Tragschiene (5, 6) abragende Tragvorrichtung (13) gegen die Schenkel der Führungsschiene (3, 4) derart abgestützt ist, dass die Tragschiene (5, 6) und die Führungsschiene (3, 4) zueinander zumindest im Wesentlichen berührungsfrei sind.

2. Auszugschiebeführung nach Anspruch 1,
**dadurch gekennzeichnet,**
**dass** die Auszugschiebeführung (1) Bestandteil eines Lastenträgers (2) ist, der seitlich beabstandete, parallel verlaufende Auszugschiebeführungen (1) aufweist.

3. Auszugschiebeführung nach Anspruch 2,
**dadurch gekennzeichnet,**
**dass** ein Lastenträger (2) zwei Auszugschiebeführungen (1) aufweist, die symmetrisch zu einer dazwischen verlaufenden Symmetrieebene angeordnet sind.

4. Auszugschiebeführung nach Anspruch 3,
**dadurch gekennzeichnet,**
**dass** die Führungsschienen (3, 4) mit ihrem U-förmigen Querschnitt nach voneinander abgewandten Seiten offen sind.

5. Auszugschiebeführung nach einem der Ansprüche 1 bis 4,
**dadurch gekennzeichnet,**
**dass** die Tragvorrichtung (13) dem in Fahrtrichtung (F) vorderen und bei ausgezogener Tragschiene (5, 6) in Überlappung zur Führungsschiene (3, 4) stehenden Endbereich der Tragschiene (5, 6) zugeordnet ist.

6. Auszugschiebeführung nach Anspruch 5,
**dadurch gekennzeichnet,**
**dass** die Tragvorrichtung (13) Tragrollen (14, 15) aufweist.

7. Auszugschiebeführung nach Anspruch 6,
**dadurch gekennzeichnet,**
**dass** die Tragvorrichtung (13) zwei Tragrollen (14, 15) aufweist, die in Längsrichtung der Tragschiene (5, 6) beabstandet und in Richtung der Ebene des Steges (21) der Führungsschiene (3, 4) höhenversetzt angeordnet sind.

8. Auszugschiebeführung nach Anspruch 6 oder 7,
**dadurch gekennzeichnet,**
**dass** die Tragrollen (14, 15) an einem Schenkel (16) der Tragschiene (5, 6) abgesetzt zu diesem angeordnet sind.

9. Auszugschiebeführung nach einem der Ansprüche 6 bis 8,
**dadurch gekennzeichnet,**
**dass** von den Tragrollen (14, 15) die in Auszugsrichtung (Pfeil 10) vordere Tragrolle (14) tiefer als die hintere Tragrolle (15) liegt.

10. Auszugschiebeführung nach einem der Ansprüche 6 bis 9,
**dadurch gekennzeichnet,**
**dass** die Tragvorrichtung (13) zur Führungsschiene (3, 4) quer zur Auszugsrichtung (Pfeil 10) führend abgestützt ist.

11. Auszugschiebeführung nach Anspruch 10,
**dadurch gekennzeichnet,**
**dass** die Führungsschiene (3, 4) an zumindest einem ihrer Schenkel vorgelagert zu ihrem Steg (21) eine Anlaufschulter (19) aufweist.

12. Auszugschiebeführung nach einem der vorhergehenden Ansprüche,
**dadurch gekennzeichnet,**
**dass** die Führungsschiene (3, 4) und die Tragschiene (5, 6) im Bereich eines Schenkels der Tragschiene (5, 6) formschlüssig gegen den Steg (21) der Führungsschiene (3, 4) verriegelbar sind.

13. Auszugschiebeführung nach Anspruch 12,
**dadurch gekennzeichnet,**
**dass** zur Verriegelung eine Verriegelungsvorrichtung (22) mit zueinander in Auszugsrichtung (Pfeil 10) beabstandeten Riegelkörpern (23, 24) vorgesehen ist.

14. Auszugschiebeführung nach Anspruch 12,
**dadurch gekennzeichnet,**
**dass** die Riegelkörper (23, 24) in der Tragschiene (5, 6) geführt in sich verjüngende Aufnahmen (26, 27) der Führungsschiene (3, 4) eingreifen.

15. Auszugschiebeführung nach Anspruch 13 oder 14,
**dadurch gekennzeichnet,**
**dass** die Riegelkörper (23, 24) zu einer Riegelbrücke (25) zusammengefasst gemeinsam verstellbar sind.

16. Auszugschiebeführung nach einem der Ansprüche 13 bis 15,
**dadurch gekennzeichnet,**
**dass** die Riegelkörper (23, 24) durch Riegelbolzen gebildet sind.

17. Auszugschiebeführung nach einem der Ansprüche 13 bis 15,
**dadurch gekennzeichnet,**
**dass** die Riegelkörper (23, 24) durch Riegelkeile gebildet sind.

18. Auszugschiebeführung nach einem der Ansprüche 13 bis 17,
**dadurch gekennzeichnet,**
**dass** die Riegelkörper (23, 24) einer Riegelbrücke (25) zueinander höhenversetzt sind.

19. Auszugschiebeführung nach einem der Ansprüche 13 bis 18,
**dadurch gekennzeichnet,**
**dass** von den Riegelkörpern (23, 24) der in Auszugsrichtung (Pfeil 10) vordere Riegelkörper (24) höher als der hintere Riegelkörper (23) liegt.

## Claims

1. Lockable extendable slide runner, in particular for extendable load carriers of vehicles, comprising a vehicle-side guide rail of U-shaped cross section and comprising a load-bearing rail which is extendable relative to the guide rail and is supported between the horizontal side members of the guide rail, **characterized in that** the load-bearing rail (5, 6) has a U-shaped cross section, reaches over the side of the guide rail (3, 4) with its vertical side members (16) and is supported against the side members of the guide rail (3, 4) in such a way, via a load-bearing device (13) which engages laterally between the side members of the guide rail (3, 4) and protrudes downwards from one of the side members (16) of the load-bearing rail (5, 6), that the load-bearing rail (5, 6) and the guide rail (3, 4) are at least substantially free from contact with each other.

2. Extendable slide runner according to Claim 1, **characterized in that** the extendable slide runner (1) is a component part of a load carrier (2) having laterally spaced, parallel-running extendable slide runners (1).

3. Extendable slide runner according to Claim 2, **characterized in that** a load carrier (2) has two extendable slide runners (1), which are arranged symmetrically to an intervening plane of symmetry.

4. Extendable slide runner according to Claim 3, **characterized in that** the guide rails (3, 4) are open with their U-shaped cross section towards sides which are facing away from each other.

5. Extendable slide runner according to one of Claims 1 to 4, **characterized in that** the load-bearing device (13) is assigned to the front end region of the load-bearing rail (5, 6) in the direction of travel (F), which front end region, when the load-bearing rail (5, 6) is pulled out, overlaps the guide rail (3, 4).

6. Extendable slide runner according to Claim 5, **characterized in that** the load-bearing device (13) has load-bearing rollers (14, 15).

7. Extendable slide runner according to Claim 6, **characterized in that** the load-bearing device (13) has two load-bearing rollers (14, 15), which are spaced apart in the longitudinal direction of the load-bearing rail (5, 6) and are arranged, vertically offset, in the direction of the plane of the web (21) of the guide rail (3, 4).

8. Extendable slide runner according to Claim 6 or 7, **characterized in that** the load-bearing rollers (14, 15) are disposed on a side member (16) of the load-bearing rail (5, 6) such that they are offset to the said side member.

9. Extendable slide runner according to one of Claims 6 to 8, **characterized in that,** of the load-bearing rollers (14, 15), the front load-bearing roller (14) in the pull-out direction (arrow 10) is situated lower than the rear load-bearing roller (15).

10. Extendable slide runner according to one of Claims 6 to 9, **characterized in that** the load-bearing device (13) is supported such that it runs relative to the guide rail (3, 4) transversely to the pull-out direction (arrow 10).

11. Extendable slide runner according to Claim 10, **characterized in that** the guide rail (3, 4) has on at least one of its side members, in advance of its web (21), a butting shoulder (19).

12. Extendable slide runner according to one of the preceding claims, **characterized in that** the guide rail (3, 4) and the load-bearing rail (5, 6), in the region of a side member of the load-bearing rail (5, 6), can be locked positively against the web (21) of the guide rail (3, 4).

13. Extendable slide runner according to Claim 12, **characterized in that,** for the locking, a locking device (22) is provided, having locking elements (23, 24) which are spaced apart in the pull-out direction (arrow 10).

14. Extendable slide runner according to Claim 12, **characterized in that** the locking elements (23, 24), guided in the load-bearing rail (5, 6), engage in tapered receiving fixtures (26, 27) of the guide rail (3, 4).

15. Extendable slide runner according to Claim 13 or 14, **characterized in that** the locking elements (23, 24), combined into a locking bridge (25), are jointly adjustable.

16. Extendable slide runner according to one of Claims 13 to 15, **characterized in that** the locking elements (23, 24) are formed by locking pins.

17. Extendable slide runner according to one of Claims 13 to 15, **characterized in that** the locking elements (23, 24) are formed by locking wedges.

18. Extendable slide runner according to one of Claims 13 to 17, **characterized in that** the locking elements (23, 24) of a locking bridge (25) are vertically offset relative to each other.

19. Extendable slide runner according to one of Claims 13 to 18, **characterized in that,** of the locking elements (23, 24), the front locking element (24) in the pull-out direction (arrow 10) is situated higher than the rear locking element (23).

## Revendications

1. Guidage d'extension coulissant verrouillable, en particulier pour des supports de charges coulissants de véhicules, avec un rail de guidage à section transversale en U du côté du véhicule ainsi qu'avec un rail de support coulissant par rapport au rail de guidage et appuyé entre les ailes horizontales du rail de guidage, **caractérisé en ce que** le rail de support (5, 6) présente une section transversale en forme de U, s'accroche latéralement avec ses ailes verticales (16) autour du rail de guidage (3, 4) et est appuyé contre les ailes du rail de guidage (3, 4) au moyen d'un dispositif de support (13) s'engageant latéralement entre les ailes du rail de guidage (3, 4) et partant d'une des ailes (16) du rail de support (5, 6), de telle manière que le rail de support (5, 6) et le rail de guidage (3, 4) soient au moins essentiellement sans contact l'un avec l'autre.

2. Guidage d'extension coulissant selon la revendication 1, **caractérisé en ce que** le guidage d'extension coulissant (1) fait partie d'un support de charges (2), qui comporte des guidages d'extension coulissants (1) parallèles et latéralement espacés.

3. Guidage d'extension coulissant selon la revendication 2, **caractérisé en ce qu'**un support de charges (2) présente deux guidages d'extension coulissants (1), qui sont disposés symétriquement par rapport à un plan de symétrie mené entre eux.

4. Guidage d'extension coulissant selon la revendication 3, **caractérisé en ce que** les rails de guidage (3, 4) de section transversale en forme de U sont ouverts sur les côtés tournés à l'opposé l'un de l'autre.

5. Guidage d'extension coulissant selon l'une quelconque des revendications 1 à 4, **caractérisé en ce que** le dispositif de support (13) est associé à la zone d'extrémité du rail de support (5, 6) située en avant dans le sens de la marche et se trouvant en chevauchement avec le rail de guidage (3, 4) lorsque le rail de support (5, 6) est étendu.

6. Guidage d'extension coulissant selon la revendication 5, **caractérisé en ce que** le dispositif de support (13) présente des galets porteurs (14, 15).

7. Guidage d'extension coulissant selon la revendication 6, **caractérisé en ce que** le dispositif de support (13) présente deux galets porteurs (14, 15), qui sont espacés dans le sens longitudinal du rail de support (5, 6) et qui sont décalés en hauteur en direction du plan de l'âme (21) du rail de guidage (3, 4).

8. Guidage d'extension coulissant selon la revendication 6 ou 7, **caractérisé en ce que** les galets porteurs (14, 15) sont montés sur une aile (16) du rail de support (5, 6) en étant décalés par rapport à celle-ci.

9. Guidage d'extension coulissant selon l'une quelconque des revendications 6 à 8, **caractérisé en ce que,** parmi les galets de support (14, 15), le galet porteur avant (14) dans la direction d'extension (flèche 10) est situé plus bas que le galet porteur arrière (15).

10. Guidage d'extension coulissant selon l'une quelconque des revendications 6 à 9, **caractérisé en ce que** le dispositif de support (13) est appuyé de façon guidée transversalement à la direction d'extension (flèche 10) par rapport au rail de guidage (3, 4).

11. Guidage d'extension coulissant selon la revendication 10, **caractérisé en ce que** le rail de guidage (3, 4) présente un épaulement d'entrée (19) formé sur au moins une de ses ailes en position avancée par rapport à son âme (21).

12. Guidage d'extension coulissant selon l'une quelconque des revendications précédentes, **caractérisé en ce que** le rail de guidage (3, 4) et le rail de support (5, 6) sont verrouillables en complémentarité de forme vers l'âme (21) du rail de guidage (3, 4) dans la région d'une aile du rail de support (5, 6).

13. Guidage d'extension verrouillable selon la revendication 12, **caractérisé en ce qu'**il est prévu pour le verrouillage un dispositif de verrouillage (22) avec des corps de verrou (23, 24) espacés l'un de l'autre dans la direction d'extension (flèche 10).

14. Guidage d'extension verrouillable selon la revendication 12, **caractérisé en ce que** les corps de verrou (23, 24), guidés dans le rail de support (5, 6), s'engagent dans des logements (26, 27) qui vont en se rétrécissant dans le rail de guidage (3, 4).

15. Guidage d'extension verrouillable selon la revendication 13 ou 14, **caractérisé en ce que** les corps de verrou (23, 24) rassemblés en un pont de verrouillage (25) sont déplaçables en commun.

16. Guidage d'extension verrouillable selon l'une quelconque des revendications 13 à 15, **caractérisé en ce que** les corps de verrou (23, 24) sont formés par des chevilles de verrouillage.

17. Guidage d'extension verrouillable selon l'une quelconque des revendications 13 à 15, **caractérisé en ce que** les corps de verrou (23, 24) sont formés par des cales de verrouillage.

18. Guidage d'extension verrouillable selon l'une quelconque des revendications 13 à 17, **caractérisé en ce que** les corps de verrou (23, 24) d'un pont de verrouillage (25) sont décalés en hauteur l'un par rapport à l'autre.

19. Guidage d'extension verrouillable selon l'une quelconque des revendications 13 à 18, **caractérisé en ce que,** parmi les corps de verrou (23, 24), le corps de verrou (24) situé en avant dans la direction d'extension (flèche 10) est placé plus haut que le corps de verrou arrière (23).
